# EUROPÄISCHE PATENTSCHRIFT

(11) **EP 0 753 853 B1**
(45) Veröffentlichungstag und Bekanntmachung des Hinweises auf die Patenterteilung: **26.03.2003**
(21) Anmeldenummer: 96109947.0
(22) Anmeldetag: 20.06.1996
(51) Int. Cl.: G11B 27/10, G11B 15/087, G11B 27/00, G11B 27/028

(54) **Nachrichtentechnisches Gerät mit einer Fernbedienung**
Information processing device with remote control
Appareil pour le traitement d'informations avec commande à distance

(30) Priorität: 11.07.1995 DE 19525226
(43) Veröffentlichungstag der Anmeldung: 15.01.1997
(73) Patentinhaber: DEUTSCHE THOMSON-BRANDT GMBH, 78048 Villingen-Schwenningen (DE)
(72) Erfinder: Platte, Hans-Joachim, 30966 Hemmingen (DE)

(56) Entgegenhaltungen:
- EP-A- 0 526 739
- US-A- 4 549 231
- US-A- 5 333 091
- PATENT ABSTRACTS OF JAPAN vol. 007, no. 266 (P-239), 26.November 1983 & JP-A-58 146072 (NOBUO MIZUKI), 31.August 1983,
- PATENT ABSTRACTS OF JAPAN vol. 017, no. 184 (P-1519), 9.April 1993 & JP-A-04 337548 (FUJITSU GENERAL LTD), 25.November 1992,
- PATENT ABSTRACTS OF JAPAN vol. 017, no. 082 (P-1489), 18.Februar 1993 & JP-A-04 283447 (MITSUBISHI ELECTRIC CORP), 8.Oktober 1992,
- PATENT ABSTRACTS OF JAPAN vol. 009, no. 097 (P-352), 26.April 1985 & JP-A-59 221851 (MATSUSHITA DENKI SANGYO KK), 13.Dezember 1984,
- PATENT ABSTRACTS OF JAPAN vol. 006, no. 171 (P-140), 4.September 1982 & JP-A-57 088542 (MATSUSHITA ELECTRIC IND CO LTD), 2.Juni 1982,

## Beschreibung

Die Erfindung geht aus von einem nachrichtentechnischen Gerät mit einer Bedieneinheit, z.B. einer Fernbedienung, das eine Schaltungsanordnung zur automatischen Klassifikation enthält, durch die eine Sendung des Programmkanals klassifiziert wird in einen ersten Typ für eine gewünschte Sendung und in einen zweiten Typ für Zusatzinformationen bzw. ungewünschte Sendung. Geräte dieser Art, beispielsweise Fernsehempfänger und Videorecorder, sind üblicherweise mit einer Fernbedienung steuerbar.

Fernsehsendungen, insbesondere Spielfilme, werden häufig durch Zusatzinformationen, z. B. Werbesendungen, unterbrochen. Diese sind blockweise aneinander gereiht und dauern üblicherweise mehrere Minuten. Für den Benutzer eines Videorecorders, der sich beispielsweise bestimmte aufgezeichnete Spielfilme häufiger anschaut, sind diese Unterbrechungen oft lästig. Es sind daher Schaltungsanordnungen bekannt, z.B. aus der US 5 333 091, die Werbungsblöcke während einer Sendung erkennen und bei der Wiedergabe mit einem Videorecorder überspringen.

Aus der JP-A-581 460 72 ist eine Fernbedienung bekannt, mit der Werbesendungen klassifiziert werden können, indem Markierungen gesetzt werden mit Hilfe einer Fernbedienung und automatisch Werbesendungen ausgelassen werden bei der Wiedergabe eines Bandes. Aus der nachveröffentlichten EP-A-0 735 754 ist ein Gerät zur Klassifizierung von Werbesendungen bekannt, das eine Mehrzahl von Kriterien zur Klassifizierung auswertet, insbesondere unter Verwendung von Fuzzy-Logic.

Da es aber keine allgemeingültigen Kriterien gibt, aus denen ableitbar ist, wann eine Sendung durch einen Werbungsblock unterbrochen wird, kann es vorkommen, daß diese Schaltungsanordnung den richtigen Umschaltzeitpunkt nicht oder zu spät erkennt.

Die Aufgabe der vorliegenden Erfindung ist es deshalb, ein nachrichtentechnisches Gerät mit einer Fernbedienung, das eine Schaltungsanordnung zur automatischen Erkennung von Zusatzinformationen in einem Programmkanal enthält, derart weiterzubilden, daß es einem Benutzer eine zuverlässigere und funktionssicherere Anwendung bietet.

Diese Aufgabe wird durch die im Anspruch 1 angegebene Erfindung gelöst. Weiterbildungen der Erfindung sind in den Unteransprüchen angegeben.

Der Erfindung liegt die Erkenntnis zugrunde, daß eine Schaltungsanordnung zur automatischen Erkennung von Zusatzinformationen in einem Programmkanal mehrere Kriterien für eine Entscheidung, ob gerade eine gewünschte Sendung (Typ 1) oder Zusatzinformationen (Typ 2) übertragen werden, auswerten muß, da kein Kriterium alleine sicher ausreichen wird, eine Sendung in Typ 1 oder Typ 2 zu klassifizieren. Anhand dieser Kriterien wird nicht immer der exakte Umschaltzeitpunkt von der Schaltungsanordnung ermittelt werden bzw. es wird immer wieder vorkommen, daß der Umschaltzeitpunkt nicht oder falsch erkannt wird. Die Fernbedienung für das nachrichtentechnische Gerät ist deshalb mit einer zusätzlichen Taste ausgestattet, mit der ein Benutzer bei Betätigung dieser Taste die Schaltungsanordnung darauf hinweist, daß ein nicht erkannter oder falsch erkannter Wechsel zwischen den beiden Typen stattgefunden hat.

Die Schaltungsanordnung kann zudem mit einer Betriebsart ausgestattet sein, in der sie bei einer Betätigung der Taste kurz vorher stattgefundene Entscheidungen der Klassifizierung erneut abarbeitet und den Zeitpunkt der Entscheidung für die wahrscheinlichste vorangegangene Umschaltung in diesem Zeitraum zwischen den beiden Typen als neuen Umschaltzeitpunkt in einem Datenspeicher, z. B. auf einer Videokassette, abspeichert.

Das nachrichtentechnische Gerät ist beispielsweise ein Videorecorder, mit dem eine Sendung auf einem Speichermedium auf Band oder optische Platte abspeicherbar ist. Bei einer Wiedergabe einer abgespeicherten Sendung wird die darin enthaltene Schaltungsanordnung bei einer Betätigung der Taste veranlaßt, vorher getroffene Fehler hatte Entscheidungen der Klassifizierung mit dem Ziel der Korrektur erneut abzuarbeiten und den Zeitpunkt für die wahrscheinlichste vorangegangene Umschaltung in diesem Zeitraum als Umschaltzeitpunkt zwischen den beiden Typen zu ermitteln. Anschließend fährt der Videorecorder z.B. das Speichermedium auf diesen Zeitpunkt zurück und markiert diesen Zeitpunkt auf dem Speichermedium als Umschaltzeitpunkt. Alternativ kann der Videorekorder diesen Zeitpunkt auf einem zusätzlichen Datenspeicher des Speichermediums abspeichern. Dadurch entfällt das Zurückspulen.

Bei einer zukünftigen Wiedergabe der gespeicherten Sendung wird dann der neu ermittelte Umschaltzeitpunkt berücksichtigt. Die Korrektur kann auch zur lernenden Anpassung der Klassifikationskriterien benutzt werden.

Die zusätzliche Taste kann vorteilhafterweise mit einer Doppelfunktion versehen sein, durch die bei einer Betätigung der Zweitfunktion die Schaltungsanordnung diesen Zeitpunkt als einen gerade stattgefundenen Wechsel zwischen den beiden Typen interpretiert und als Umschaltzeitpunkt abspeichert.

Die Doppelfunktionen der Taste können beispielsweise durch einmalige oder doppelte Betätigung (Einfachklick oder Doppelklick) der Taste aktiviert werden oder durch kurzes und langes Betätigen.

Ausführungsbeispiele der Erfindung werden anhand der schematischen Zeichnungen erläutert. Darin zeigen
- Fig. 1: eine Fernbedienung mit einem Videorecorder und
- Fig. 2: ein Ausschnitt eines Videobandes mit verschiedenem Programmmaterial.

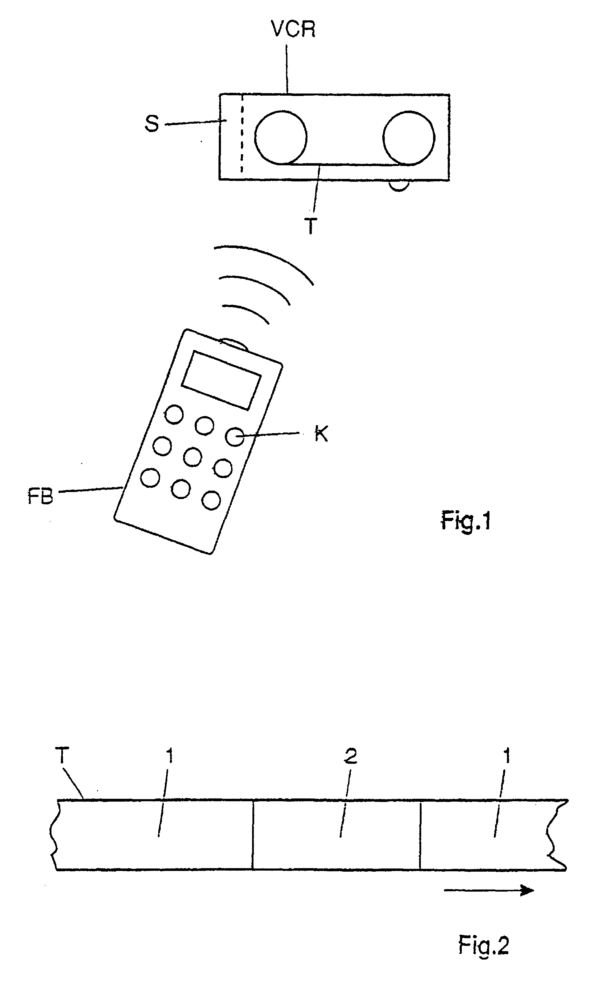

Der Videorecorder VCR der Fig. 1 enthält eine Schaltungsanordnung S zur automatischen Erkennung von Zusatzinformationen, z.B. Werbung, in einem Programmkanal. Durch die Schaltungsanordnung wird eine Sendung des Programmkanals abschnittsweise klassifiziert in einen ersten Typ einer gewünschten Sendung und in einen zweiten Typ für die Zusatzinformationen. Bei der Aufnahme einer Sendung wird zusätzlich zu der Sendung auch abschnittsweise die Art des Typs auf dem Videoband T abgespeichert. Bei der Wiedergabe wird dann nur der erste Typ normal abgespielt und der zweite Typ der Sendung übersprungen.

Die Fernbedienung FB des Videorecorders VCR enthält eine zusätzliche Taste K, mit der ein Benutzer die Schaltungsanordnung S des Videorecorders VCR darauf hinweist, daß der falsche Typ der Sendung abgespielt oder gerade übersprungen wird. Einem Benutzer wird durch diese Taste ermöglicht, interaktiv einzugreifen, wenn die Schaltungsanordnung einen richtigen Umschaltzeitpunkt zwischen Typ 1 und Typ 2 nicht erkannt hat. Hat die Schaltungsanordnung beispielsweise den Beginn eines Werbungsblocks bei der Wiedergabe nicht rechtzeitig erkannt, so kann der Benutzer durch Drücken der Taste K den Videorecorder in den schnellen Vorlauf zum nächsten Umschaltpunkt umschalten. Alternativ kann der Videorecorder VCR bei Betätigung der Taste K kurz vorher stattgefundene Entscheidungen zur Klassifizierung erneut abarbeiten, den Zeitpunkt für die wahrscheinlichste dem Tastendruck vorangegangene Umschaltung bestimmen, und das Band auf diesen Zeitpunkt zurückspulen. Dieser Zeitpunkt wird dann als richtiger Umschaltzeitpunkt auf dem Band abgespeichert und kann bei zukünftiger Wiedergabe der Sendung korrekt berücksichtigt werden.

Die Schaltungsanordnung S kann vorteilhaft mit einer selbstlernenden Logik ausgestattet sein, die bei einer Betätigung der Taste K die Kriterien der Klassifizierung überprüft und diese den z.B. senderseitig geänderten Bedingungen anpaßt. Die Taste K kann insbesondere mit einer Doppelfunktion ausgestattet sein, z.B. einfache oder doppelte Betätigung oder langer Tastendruck und kurzer Tastendruck. Bei Betätigung der Zweitfunktion kann der Benutzer die Schaltungsanordnung S auf einen gerade stattgefunden Umschaltzeitpunkt hinweisen. Die selbstlernende Logik der Schaltungsanordnung analysiert die zu diesem Zeitpunkt vorliegenden Kriterien und speichert sie ab für künftige Entscheidungen zur Klassifizierung. Gleichzeitig wird der Umschaltzeitpunkt auf dem Band markiert.

In der Fig. 2 ist ein Videoband T dargestellt, das Programmaterial des ersten Typs 1 und Programmaterial des zweiten Typs 2 enthält. Bei Übergang von Typ 1 auf Typ 2 und umgekehrt sind zusätzlich Umschaltzeitpunkte markiert. Der schnelle Vorlauf zum Überspringen des Typs 2 kann dermaßen ausgestaltet sein, daß auf dem Bildschirm des zugehörigen Fernsehgerätes noch Bilder der Sendung erkennbar sind. Wird nun ein Werbungsblock übersprungen und erkennt die Schaltungsanordnung S das Ende des Werbungsblockes nicht rechtzeitig, so kann der Benutzer durch Betätigung der Taste K auch hier wieder den Schaltungstyp der Sendung umschalten und den Videorecorder auf Wiedergabe stellen. Für diesen Umschaltzeitpunkt können von der selbstlernenden Logik ebenfalls vorangegangene Entscheidungen überarbeitet werden.

Die Erfindung ist auch auf weitere nachrichtentechnische Geräte mit einer Fernbedienung anwendbar, die Information auf anderen magnetischen oder auch optischen Medien abspeichern und eine entsprechende Schaltungsanordnung S zur automatischen Erkennung von Zusatzinformationen in einem Programmkanal enthalten. Es kann z.B. auch eine Videokassette mit einem Speicherchip ausgestattet sein, in dem Umschaltzeitpunkte abgespeicherbar sind.

Die bisherigen Ausführungsbeispiele beziehen sich auf nachrichtentechnische Geräte, die bei Aufnahmen sowohl Typ 1 als auch Typ 2 des Programmkanals abspeichern und bei der Wiedergabe Typ 2 überspringen. Ein weiteres Anwendungsgebiet sind aber auch Geräte, die eine Sendung in Typ 1 und Typ 2 in Echtzeit klassifizieren und nur Typ 1 wiedergeben bzw. aufzeichnen. Beispielsweise kann ein Fernsehgerät oder ein Computer mit einer Schaltungsanordnung S zur automatischen Erkennung von Zusatzinformation in einem Programmkanal ausgestattet sein, durch die eine Sendung des Programmkanals klassifiziert wird in Typ 1 bzw. Typ 2. Ein Benutzer kann dann mit der zusätzlichen Taste K der Fernbedienung FB die Schaltungsanordnung S auf einen falsch erkannten Umschaltzeitpunkt hinweisen.

Das nachrichtentechnische Gerät kann beispielsweise auch ein Gerät sein, das zwischen Fernsehgerät und Videorecorder geschaltet wird, und das bei der Übertragung zwischen diesen beiden Geräten Werbungsblöcke ausblendet oder den Videorecorder in der Weise steuert, daß Werbungsblöcke ausgeblendet werden.

Ein weiteres Anwendungsgebiet der Erfindung sind Radios mit Fernbedienung, bei denen eine Schaltungsanordnung S Sprachbeiträge, wie Nachrichten oder Werbung, aus einer Musiksendung ausblenden.

## Patentansprüche

1. Nachrichtentechnisches Gerät mit einer Bedieneineit, z.B. einer Fernbedienung, das eine Schaltungsanordnung zur Unterscheidung von Informations- oder Programmteilen in einem Programmkanal enthält, durch die eine Sendung des Programmkanals klassifiziert wird in einen ersten Typ für eine gewünschte Sendung und in einen zweiten Typ von Zusatzinformationen, wobei die Schaltungsanordnung mehrere Kriterien für diese Klassifizierung auswertet, **dadurch gekennzeichnet, daß** die Bedieneinheit (FB) eine zusätzliche Taste (K) zur Korrektur der Klassifizierung aufweist, und daß die Schaltungsanordnung (S) eine Betriebsart aufweist, in der sie bei einer Betätigung der Taste (K) kurz vorher stattgefundene Entscheidungen der Klassifizierung mit dem Ziel der Korrektur erneut abarbeitet und einen nächst wahrscheinlicheren Zeitpunkt der Entscheidung für die vorangegangene Umschaltung zwischen den beiden Typen in diesem Zeitraum als neuen Umschaltzeitpunkt bestimmt.

2. Nachrichtentechnisches Gerät mit einer Bedieneinheit nach Anspruch 1, **dadurch gekennzeichnet, daß** mit dem nachrichtentechnischen Gerät eine Sendung auf einem Speichermedium abspeicherbar ist, und daß bei einer Wiedergabe einer abgespeicherten Sendung die Schaltungsanordnung (S) bei einer Betätigung der Taste (K) kurz vorher stattgefundene Entscheidungen der Klassifizierung mit dem Ziel der Korrektur erneut abarbeitet und den nächst wahrscheinlichen Zeitpunkt für eine vorangegangene Umschaltung in diesem Zeitraum als Umschaltzeitpunkt zwischen den beiden Typen bestimmt, das Speichermedium auf diesen Zeitpunkt zurückstellt und diesen Zeitpunkt auf dem Speichermedium abspeichert.

3. Nachrichtentechnisches Gerät mit einer Bedieneinheit nach Anspruch 1 oder 2, **dadurch gekennzeichnet, daß** die zusätzliche Taste (K) mit einer Doppelfunktion versehen ist, mit der die Schaltungsanordnung (S) bei Betätigung der Zweitfunktion auf einen gerade stattgefundenen Wechsel zwischen den beiden Typen hingewiesen wird und diesen Zeitpunkt als Unischaltzeitpunkt abspeichert.

4. Nachrichtentechnisches Gerät mit einer Bedieneinheit nach Anspruch 3, **dadurch gekennzeichnet, daß** die Zweitfunktion der Taste (K) durch einen Doppelklick auf die Taste (K) aktivierbar ist.

## Revendications

1. Appareil pour le traitement d'informations avec une unité de commande, par exemple une commande à distance, qui contient une disposition de circuit permettant de distinguer les éléments d'information ou les éléments de programme dans un canal de programme et de classer une émission du canal de programme dans un premier type pour une émission souhaitée et dans un second type pour des informations complémentaires, où la disposition de circuit exploite plusieurs critères pour cette classification, **caractérisé en ce que** l'unité de commande (FB) présente un bouton supplémentaire (K) pour la correction de la classification, et **en ce que** la disposition de circuit (S) est dotée d'un mode de fonctionnement dans lequel, grâce à une activation du bouton (K), elle ré-exécute des décisions prises juste avant concernant la classification dans un but correctif et détermine un moment de décision suivant le plus probable pour la commutation suivante entre les deux types dans cette période en tant que nouveau moment de commutation.

2. Appareil pour le traitement d'informations avec une unité de commande selon la revendication 1, **caractérisé en ce que** l'appareil pour le traitement d'informations permet d'enregistrer une émission sur un support de mémoire, et **en ce que**, lors d'une reproduction d'une émission enregistrée, la disposition de circuit (S), grâce à une activation du bouton (K), ré-exécute des décisions prises juste avant concernant la classification dans un but correctif et détermine le moment suivant le plus probable pour une commutation suivante dans cette période en tant que moment de commutation entre les deux types, ramène le support de mémoire à ce moment et enregistre ce moment sur le support de mémoire.

3. Appareil pour le traitement d'informations avec une unité de commande selon la revendication 1 ou 2, **caractérisé en ce que** le bouton supplémentaire (K) est muni d'une double fonction permettant à la disposition de circuit (S) d'être informée, grâce à une activation de la fonction secondaire, d'un changement récent entre les deux types, et d'enregistrer ce moment en tant que moment de commutation.

4. Appareil pour le traitement d'informations avec une unité de commande selon la revendication 3, **caractérisé en ce que** la fonction secondaire du bouton (K) peut être activée par un double-clic sur le bouton (K).

## Claims

1. Telecommunication device having a control unit, for example a remote controller, which telecommunication device contains a circuit arrangement to distinguish between information and programme sections in a programme channel, by means of which circuit arrangement a transmission of the programme channel is classified into a first type for a desired transmission and into a second of type of additional information, wherein the circuit arrangement evaluates a plurality of criteria for said classification,
**characterized in that**
the control unit (FB) contains an additional button (K) for correction of the classification and that the circuit arrangement (S) contains an operating mode during which it newly processes upon an actuation of the button (K) decisions of the classification which have taken place shortly beforehand, with the aim of correction, and defines a next propable point of time of decision for the preceding switching between said two types during this period as a new changeover time.

2. Telecommunication device having a control unit according to claim 1, **characterized in that** a transmission can be stored by means of the telecommunications device on a storage medium, and **in that**, when a stored transmission is replayed, the circuit arrangement (S) once again works out, when the button (K) is operated, decisions which have taken place shortly beforehand relating to the classification, with the aim of correction, and defines the closest probable time for a preceding changeover in this time period as the changeover time between the two types, resets the storage medium to this time and stores this time on the storage medium.

3. Telecommunication device having a control unit according to claim 1 or 2, **characterized in that** the additional button (K) is provided with a double function, by means of which the circuit arrangement (S) is informed, when the second function is operated, of a change which has just taken place between the two types, and stores this time as the changeover time.

4. Telecommunication device having a control unit according to claim 3, **characterized in that** the second function of the button (K) can be activated by a double click on the button (K).
